# EUROPEAN PATENT APPLICATION

(11) **EP 4 832 091 A1**
(43) Date of publication of application: **28.10.2026**
(21) Application number: 24908371.8
(22) Date of filing: 18.12.2024
(51) Int. Cl.: H01M 4/36, H01M 4/525, H01M 4/505, H01M 10/052, H01M 4/131, C01G 53/00, H01M 4/02

(54) **CATHODE ACTIVE MATERIAL FOR LITHIUM SECONDARY BATTERY, MANUFACTURING METHOD OF SAME, AND LITHIUM SECONDARY BATTERY COMPRISING SAME**

(30) Priority: 18.12.2023 KR 20230185138
(71) Applicant: POSCO Holdings Inc., Pohang-si, Gyeongsangbuk-do 37859 (KR)
(72) Inventor: YANG, Seunghoon, Pohang-si, Gyeongsangbuk-do 37859 (KR); PARK, Jongil, Pohang-si, Gyeongsangbuk-do 37859 (KR); HAN, Juhyeong, Pohang-si, Gyeongsangbuk-do 37859 (KR); LEE, Sanghyuk, Pohang-si, Gyeongsangbuk-do 37859 (KR); BAE, Changgeun, Pohang-si, Gyeongsangbuk-do 37859 (KR)
(74) Representative: Pfenning, Meinig & Partner mbB
(86) International application number: PCT/KR2024/097157
(87) International publication number: WO 2025/136067

(57) **Abstract**

A positive electrode active material for a lithium secondary battery according to one embodiment may include a metal oxide including nickel and manganese; and a coating layer positioned on a surface of the metal oxide and containing cobalt, wherein a content of nickel in the metal oxide is 0.75 mol or less based on 1 mol of all metals excluding lithium, and the positive electrode active material may satisfy the following Equation 1. [Equation 1] $22.0 \leq \left(A*C\right) / B \leq 26.5$

In Equation 1, A and B mean an a-axis constant and a c-axis constant, respectively, measured by XRD analysis of the positive electrode active material, and C means a crystallite size measured by XRD analysis of the positive electrode active material.

## Description

### [TECHNICAL FIELD]

The present invention relates to a positive electrode active material for a lithium secondary battery, a method for manufacturing the same, and a lithium secondary battery including the same.

### [BACKGROUND ART]

Recently, with explosive demand for electric vehicles and demand for increased driving range, development of secondary batteries having high capacity and high energy density to meet such demand is being actively conducted worldwide.

As positive electrode active materials of such secondary batteries, lithium cobalt oxide (LiCoO₂), lithium nickel oxide (LiNiO₂), lithium manganese oxide (LiMnO₂ or LiMn₂O₄, etc.), lithium iron phosphate compounds (LiFePO₄), lithium nickel cobalt manganese oxide, and the like are used. Among these, lithium cobalt oxide and lithium nickel cobalt manganese oxide have advantages of a high operating voltage and excellent capacity characteristics, and thus are widely used and are applied as positive electrode active materials for high voltage.

However, with the recent rapid growth of the lithium secondary battery market, the cost of raw materials is increasing. In particular, positive electrode active materials account for the largest proportion of the cost of lithium secondary batteries, and among them, cobalt (Co) is an expensive metal and has a problem of unstable supply.

Accordingly, there is a limit to mass use of positive electrode active materials having a high cobalt content as power sources in fields such as electric vehicles, and there is a need to develop positive electrode active materials in which cobalt is excluded or the content thereof is reduced.

### [DETAILED DESCRIPTION OF THE INVENTION]

### [Technical Problem]

The present embodiment is intended to provide a positive electrode active material for a lithium secondary battery having excellent initial capacity, rate characteristics, and high-temperature lifespan characteristics, a method for manufacturing the same, and a lithium secondary battery including the same.

### [Technical Solution]

A positive electrode active material for a lithium secondary battery according to one embodiment may include a metal oxide including nickel and manganese; and a coating layer positioned on a surface of the metal oxide and containing cobalt, wherein a content of nickel in the metal oxide is 0.75 mol or less based on 1 mol of all metals excluding lithium, and the positive electrode active material may satisfy the following Equation 1. [Equation 1] $22.0 \leq \left(A*C\right) / B \leq 26.5$

In Equation 1, A and B mean an a-axis constant and a c-axis constant, respectively, measured by XRD analysis of the positive electrode active material, and C means a crystallite size measured by XRD analysis of the positive electrode active material.

An a-axis constant measured by XRD analysis of the positive electrode active material may be in a range of 2.880 Å to 2.890 Å.

A c-axis constant measured by XRD analysis of the positive electrode active material may be in a range of 14.262 Å to 14.281 Å.

A crystallite size of the positive electrode active material may be in a range of 94.0 nm to 131.0 nm.

In one embodiment, the positive electrode active material may have an I003/I104 ratio, which is a ratio of a peak value I003 corresponding to a (003) plane and a peak value I104 corresponding to a (104) plane, measured by XRD analysis, in a range of 1.1020 to 1.2640.

A content of cobalt based on the entire metal oxide on which the coating layer is formed may be 0.012 mol or less.

A content of cobalt based on the entire metal oxide on which the coating layer is formed may be in a range of 0.001 mol to 0.012 mol.

The metal oxide may not include cobalt.

A content of nickel in the metal oxide may be in a range of 0.65 to 0.75 based on 1 mol of all metals excluding lithium.

A content of manganese in the metal oxide may be in a range of 0.25 to 0.35 based on 1 mol of all metals excluding lithium.

In one embodiment, the metal oxide may be represented by the following Chemical Formula 1.

[Chemical Formula 1] Liₐ[NiₓMn_{y}M_{z}]O₂

In Chemical Formula 1, 0.8≤a≤1.2, 0.67≤x≤0.73, 0.25≤y≤0.38, 0≤z≤0.2, x+y+z=1, and M is Zr, Al, B, Y, Mg, Ti, Nb, W, Sc, Si, V, Fe, Mo, Ce, Hf, Ta, La, Sr, Sn, Sb, Zn, Cu, Ge, Mo, Ru, Ir, Na, or a combination thereof.

An average particle diameter (D50) of the positive electrode active material may be in a range of 10 µm to 15 µm.

A method for manufacturing a positive electrode active material for a lithium secondary battery according to another embodiment may include preparing a metal hydroxide including nickel and manganese; preparing a mixture by mixing the metal hydroxide and a lithium raw material; obtaining a calcined product by calcining the mixture; and obtaining a metal oxide on which a coating layer is formed by mixing the calcined product and a coating raw material including cobalt and then heat-treating the same, wherein the metal oxide on which the coating layer is formed may satisfy the following Equation 1. [Equation 1] $22.0 \leq \left(A*C\right) / B \leq 26.5$

In Equation 1, A and B mean an a-axis constant and a c-axis constant, respectively, measured by XRD analysis of the positive electrode active material, and C means a crystallite size measured by XRD analysis of the positive electrode active material.

The coating raw material including cobalt may be introduced such that a content of cobalt is 0.012 mol or less based on the entire metal oxide on which the coating layer is formed.

The coating raw material including cobalt may include at least one of Co(OH)₂, CoCl₂, CoO, CoF₃, CoSO₄·xH₂O, CoSO₄·7H₂O, (CH₃COO)₂Co·4H₂O, Co(NO₃)₂·6H₂O, (CH₃CO₂)₂Co, CoCO₃·xH₂O, Co₃(PO₄)₂, and a combination thereof.

An average particle diameter (D50) of the coating raw material including cobalt may be in a range of 10 µm to 12 µm.

In one embodiment, the heat treatment process may be performed only once.

A positive electrode for a lithium secondary battery according to still another embodiment may include the positive electrode active material according to one embodiment.

A lithium secondary battery according to still another embodiment may include a positive electrode including the positive electrode active material according to one embodiment.

### [Advantageous Effects]

According to the present embodiment, since a coating layer including a trace amount of cobalt is positioned on a surface of a metal oxide not including cobalt, a positive electrode active material having excellent initial discharge capacity, rate characteristics, and high-temperature lifespan characteristics can be implemented.

In addition, since the positive electrode active material of the present embodiment includes cobalt in a trace amount, excellent electrochemical characteristics can be secured while minimizing production costs, and thus economic feasibility is excellent.

### [BRIEF DESCRIPTION OF THE DRAWINGS]

FIG. 1 shows results of measuring initial capacities of positive electrode active materials manufactured according to Examples 1 to 3 and Comparative Examples 1 to 7.
FIG. 2 shows results of measuring high-temperature lifespan characteristics of positive electrode active materials manufactured according to Examples 1 to 3 and Comparative Examples 1 to 7.
FIG. 3 shows XRD measurement results for positive electrode active materials manufactured according to Examples 1 to 3 and Comparative Examples 1 to 7.

### [BEST MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In addition, unless otherwise specifically stated, % means wt%, and 1 ppm means 0.0001 wt%.

In the present specification, the term "combination(s) thereof" described in a Markush-type expression means one or more mixtures or combinations selected from the group consisting of the components described in the Markush-type expression, and means that one or more selected from the group consisting of the components is included.

Hereinafter, embodiments of the present invention will be described in detail so that a person having ordinary skill in the art to which the present invention pertains can easily practice the present invention. However, the present invention may be embodied in various different forms and is not limited to the embodiments described herein.

### Positive Electrode Active Material for Lithium Secondary Battery

A positive electrode active material for a lithium secondary battery according to one embodiment may include a metal oxide including nickel and manganese; and a coating layer positioned on a surface of the metal oxide and containing cobalt, wherein a content of nickel in the metal oxide is 0.75 mol or less based on 1 mol of all metals excluding lithium, and the positive electrode active material may satisfy the following Equation 1. [Equation 1] $22.0 \leq \left(A*C\right) / B \leq 26.5$

In Equation 1, A and B mean an a-axis constant and a c-axis constant, respectively, measured by XRD analysis of the positive electrode active material, and C means a crystallite size measured by XRD analysis of the positive electrode active material.

Equation 1 is derived using the a-axis lattice constant, the c-axis lattice constant, and the crystallite size, and a value of Equation 1 may be in a range of 22.0 to 26.5, and more specifically in a range of 23.5 to 26.0. When the value of Equation 1 satisfies the above range, interfacial resistance between particles can be reduced, and structural stability is excellent, so that a positive electrode active material having excellent electrochemical characteristics such as lifespan and output characteristics can be implemented.

More specifically, an a-axis constant measured by XRD analysis of the positive electrode active material may be in a range of 2.880 Å to 2.890 Å, and more specifically in a range of 2.881 Å to 2.886 Å. When the a-axis lattice constant satisfies the above range, lithium ions can be stably diffused in a horizontal direction, and thus a positive electrode active material having excellent ionic conductivity can be implemented.

The c-axis constant measured by XRD analysis of the positive electrode active material may be in a range of 14.262 Å to 14.281 Å, and more specifically in a range of 14.265 Å to 14.280 Å. When the c-axis lattice constant satisfies the above range, an interlayer distance is appropriately maintained, and movement of lithium ions into/out of the crystal structure becomes advantageous, thereby improving charge speed and output characteristics of a lithium secondary battery.

In one embodiment, the crystallite size of the positive electrode active material may be in a range of 94.0 nm to 131.0 nm, and more specifically in a range of 115 nm to 130 nm. When the crystallite size satisfies the above range, structural stability of the positive electrode active material can be secured, and thus lifespan characteristics can be improved by lowering interfacial resistance.

The positive electrode active material may have an I003/I104 ratio, which is a ratio of a peak value I003 corresponding to a (003) plane and a peak value I104 corresponding to a (104) plane, measured by XRD analysis, in a range of 1.1020 to 1.2640, and more specifically in a range of 1.1000 to 1.2000.

The I003/I104 value is a characteristic indicating cation mixing between lithium ions and transition metal ions. When the above range is satisfied, it indicates that a layered structure is well formed. Accordingly, lithium ion diffusion is smooth, charge/discharge speed can be improved, initial capacity and efficiency of a lithium secondary battery can be improved, and excellent lifespan characteristics can be secured.

In one embodiment, a content of cobalt based on the entire metal oxide on which the coating layer is formed may be 0.012 mol or less.

The present embodiment includes a metal oxide having a cobalt-free composition that does not contain cobalt. Since the lithium metal oxide does not contain cobalt, manufacturing costs can be reduced.

The metal oxide may have a layered crystal structure.

When the metal oxide does not include cobalt in the crystal structure as in the present embodiment, structural instability of particles increases, and thus electrochemical characteristics such as rate characteristics and resistance characteristics are deteriorated. Accordingly, in the present embodiment, by forming a coating layer including a trace amount of cobalt on the surface of the metal oxide, a positive electrode active material having excellent electrochemical performance can be implemented while reducing manufacturing costs.

The metal oxide may be secondary particles formed by aggregation of a plurality of primary particles.

In the present specification, "secondary particle" means an aggregate in which several tens to several hundreds of primary particles are aggregated by physical or chemical bonding between the primary particles even without an intentional aggregation or assembly process for the primary particles, that is, a secondary structure.

In addition, "primary particle" means a minimum particle unit distinguished as one lump when a cross-section of a positive electrode active material is observed through a scanning electron microscope (SEM), and may be composed of one crystal grain or may be composed of a plurality of crystal grains.

In addition, "crystal grain" means a distinguishable region in which atoms in a primary particle form a lattice structure in a predetermined direction.

A content of cobalt based on the entire metal oxide on which the coating layer is formed may be 0.012 mol or less, and more specifically in a range of 0.001 mol to 0.012 mol. When the content of cobalt included in the coating layer satisfies the above range, excellent electrochemical characteristics of the positive electrode active material can be secured without greatly increasing manufacturing costs.

A content of nickel in the metal oxide may be in a range of 0.65 to 0.75 based on 1 mol of all metals excluding lithium. When the content of nickel is too small, capacity characteristics and high-potential safety may deteriorate. When the content of nickel is too large, lifespan characteristics may deteriorate.

A content of manganese in the metal oxide may be in a range of 0.25 to 0.35 based on 1 mol of all metals excluding lithium. When the content of manganese is too small, structural safety characteristics may deteriorate. When the content of manganese is too large, low-potential region safety characteristics may deteriorate.

The metal oxide according to one embodiment may be represented by the following Chemical Formula 1.

[Chemical Formula 1] Liₐ[NiₓMn_{y}M_{z}]O₂

In Chemical Formula 1, 0.8≤a≤1.2, 0.67≤x≤0.73, 0.25≤y≤0.38, 0≤z≤0.2, x+y+z=1, and M is Zr, Al, B, Y, Mg, Ti, Nb, W, Sc, Si, V, Fe, Mo, Ce, Hf, Ta, La, Sr, Sn, Sb, Zn, Cu, Ge, Mo, Ru, Ir, Na, or a combination thereof.

The average particle diameter (D50) of the positive electrode active material may be in a range of 10 µm to 15 µm. When the average particle diameter satisfies the above range, a positive electrode active material having excellent capacity and output characteristics can be implemented.

### Method for Manufacturing Positive Electrode Active Material for Lithium Secondary Battery

A method for manufacturing a positive electrode active material for a lithium secondary battery according to one embodiment may include preparing a metal hydroxide including nickel and manganese; preparing a mixture by mixing the metal hydroxide and a lithium raw material; obtaining a calcined product by calcining the mixture; and obtaining a metal oxide on which a coating layer is formed by mixing the calcined product and a coating raw material including cobalt and then heat-treating the same, wherein the metal oxide on which the coating layer is formed may satisfy the following Equation 1. [Equation 1] $22.0 \leq \left(A*C\right) / B \leq 26.5$

In Equation 1, A and B mean an a-axis constant and a c-axis constant, respectively, measured by XRD analysis of the positive electrode active material, and C means a crystallite size measured by XRD analysis of the positive electrode active material.

Equation 1 is the same as described above, and thus description thereof will be omitted here.

Hereinafter, each step will be described in more detail.

First, a step of preparing a metal hydroxide including nickel and manganese is performed.

The metal hydroxide including nickel and manganese may be manufactured, for example, by adding a complexing agent-containing solution and a pH adjusting agent-containing solution to a transition metal-containing solution including a nickel raw material and a manganese raw material, thereby performing a coprecipitation reaction.

The nickel raw material is not particularly limited as long as it is used in the art for manufacturing a positive electrode active material precursor. For example, the nickel raw material may be a nickel-containing sulfate, acetate, nitrate, halide, sulfide, hydroxide, oxide, oxyhydroxide, or the like, and specifically may be NiSO₄, NiSO₄·6H₂O, Ni(OH)₂, NiO, NiOOH, NiCO₃·2Ni(OH)₂·4H₂O, NiC₂O₂·2H₂O, Ni(NO₃)₂·6H₂O, a fatty acid nickel salt, a nickel halide, or a combination thereof, but is not limited thereto.

The manganese raw material is not particularly limited as long as it is used in the art for manufacturing a positive electrode active material precursor. For example, the manganese raw material may be a manganese-containing sulfate, acetate, nitrate, halide, sulfide, hydroxide, oxide, oxyhydroxide, or a combination thereof, and specifically may be MnSO₄, MnCO₃, Mn(NO₃)₂, manganese acetate, a manganese dicarboxylate, manganese citrate, a manganese salt such as a fatty acid manganese salt, a manganese oxide such as Mn₂O₃, MnO₂, and Mn₃O₄, oxyhydroxide, manganese chloride, or a combination thereof, but is not limited thereto.

The transition metal-containing solution may be prepared by adding the nickel raw material and the manganese raw material to a solvent, specifically water, or a mixture of water and an organic solvent uniformly miscible with water, for example, alcohol or the like.

The complexing agent-containing solution serves to form a complex, and may include, as a complexing agent, for example, NH₃, NH₄OH, (NH₄)₂SO₄, NH₄NO₃, NH₄Cl, CH₃COONH₄, NH₄CO₃, or a combination thereof, but is not limited thereto. Meanwhile, the complexing agent-containing solution may be used in the form of an aqueous solution, and in this case, water, or a mixture of water and an organic solvent uniformly miscible with water, for example, alcohol or the like, may be used as a solvent.

The pH adjusting agent may be a caustic soda solution, and may include an alkali compound such as a hydroxide of an alkali metal or alkaline earth metal, such as NaOH, KOH, or Ca(OH)₂, a hydrate thereof, or a combination thereof. The caustic soda solution may also be used in the form of an aqueous solution, and in this case, water, or a mixture of water and an organic solvent uniformly miscible with water, such as alcohol, may be used as a solvent.

The coprecipitation reaction may be performed under an inert atmosphere such as nitrogen or argon. Specifically, the coprecipitation reaction may be performed by injecting N₂ to prevent oxidation of metal ions.

Next, a step of preparing a mixture by mixing the metal hydroxide and a lithium raw material is performed.

The lithium raw material is not particularly limited as long as it is generally used in the art, and may be, for example, LiCO₃, LiOH, or LiOH·H₂O.

In addition, the mixture may be prepared such that a molar ratio (Li/Me) of lithium (Li) to all metals (Me) excluding lithium is in a range of 1.05 to 1.09. When the molar ratio (Li/Me) of lithium (Li) to all metals (Me) excluding lithium satisfies the above range, high-temperature lifespan characteristics were shown to be very excellent.

As necessary, a doping raw material may be introduced in this step, and for example, a raw material including at least one of Zr, Al, B, Y, Mg, Ti, Nb, W, Sc, Si, V, Fe, Mo, Ce, Hf, Ta, La, Sr, Sn, Sb, Zn, Cu, Ge, Mo, Ru, Ir, and Na may be used.

Next, a step of obtaining a calcined product by calcining the mixture is performed.

Specifically, the calcination may be performed at a temperature in a range of 700 to 850°C for 5 hours to 20 hours. When the calcination temperature is too high, structural stability of the positive electrode active material may decrease, thereby decreasing reversible capacity, and when the calcination temperature is too low, there is a problem that particle uniformity decreases.

In addition, when the calcination time is excessively long, there is a problem in terms of productivity and economic feasibility, and when the calcination time is excessively short, there is a problem that a synthesis reaction is not completely performed or a crystal structure is not sufficiently developed.

Next, a step of obtaining a metal oxide on which a coating layer is formed by mixing the calcined product and a coating raw material including cobalt and then heat-treating the same is performed.

In the step of obtaining the metal oxide on which the coating layer is formed, the heat treatment may be performed only once. For example, the heat treatment may be performed at 550°C to 700°C for 3 hours to 10 hours. When the heat treatment process satisfies the above conditions, an amount of lithium remaining on the surface can be reduced, and at the same time, the surface structure can be stabilized.

The coating raw material including cobalt may be introduced such that a content of cobalt is 0.012 mol or less, and more specifically in a range of 0.001 mol to 0.012 mol, based on the entire metal oxide on which the coating layer is formed. The detailed description of the cobalt content is the same as described above, and thus will be omitted here.

The coating raw material including cobalt may include, for example, at least one of Co(OH)₂, CoCl₂, CoO, CoF₃, CoSO₄·xH₂O, CoSO₄·7H₂O, (CH₃COO)₂Co·4H₂O, Co(NO₃)₂·6H₂O, (CH₃CO₂)₂Co, CoCO₃·xH₂O, Co₃(PO₄)₂, and a combination thereof.

An average particle diameter (D50) of the coating raw material including cobalt may be in a range of 10 µm to 20 µm. When the average particle diameter of the coating raw material satisfies the above range, the coating layer can be uniformly formed.

### Positive Electrode

Another embodiment provides a positive electrode including a current collector and a positive electrode active material layer positioned on one surface of the current collector and including the positive electrode active material of the above-described embodiment.

The characteristics of the positive electrode active material constituting the positive electrode active material layer are the same as described above. Therefore, a detailed description of the positive electrode active material will be omitted.

As the current collector, for example, stainless steel, aluminum, nickel, titanium, calcined carbon, or aluminum or stainless steel surface-treated with carbon, nickel, titanium, silver, or the like may be used.

Meanwhile, the positive electrode active material layer may include a binder and a conductive material.

At this time, the binder serves to improve adhesion between positive electrode active material particles and adhesion between the positive electrode active material and the positive electrode current collector. Specific examples thereof may include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluorine rubber, or various copolymers thereof, and one thereof alone or a mixture of two or more thereof may be used, but the binder is not limited thereto. The binder may be included in an amount of 1 to 30 wt% based on the total weight of the positive electrode active material layer.

In addition, the conductive material is used to impart conductivity to the electrode, and may be used without particular limitation as long as it has electron conductivity and does not cause a chemical change in the battery to be configured. Specific examples thereof may include graphite such as natural graphite or artificial graphite; carbon-based materials such as carbon black, acetylene black, Ketjen black, channel black, furnace black, lamp black, thermal black, and carbon fibers; metal powder or metal fibers such as copper, nickel, aluminum, and silver; conductive whiskers such as zinc oxide and potassium titanate; conductive metal oxides such as titanium oxide; or conductive polymers such as polyphenylene derivatives, and one thereof alone or a mixture of two or more thereof may be used, but the conductive material is not limited thereto. The conductive material may generally be included in an amount of 1 to 30 wt% based on the total weight of the positive electrode active material layer.

The positive electrode may be manufactured according to a conventional method for manufacturing a positive electrode, except that the above-described positive electrode active material is used.

Specifically, the positive electrode may be manufactured by applying, onto a positive electrode current collector, a composition for forming a positive electrode active material layer including the above-described positive electrode active material and, as necessary, optionally including a binder, a conductive material, or a solvent, and then drying and rolling the same. At this time, the types and contents of the positive electrode active material, the binder, and the conductive material are as described above.

The solvent may be a solvent generally used in the art, and examples thereof may include dimethyl sulfoxide (DMSO), isopropyl alcohol, N-methylpyrrolidone (NMP), acetone, or water, and one thereof alone or a mixture of two or more thereof may be used. The amount of the solvent used is sufficient as long as it can dissolve or disperse the positive electrode active material, the conductive material, and the binder in consideration of a coating thickness and manufacturing yield of the slurry, and can provide a viscosity capable of exhibiting excellent thickness uniformity during subsequent coating for manufacturing the positive electrode.

Alternatively, the positive electrode may be manufactured by casting the composition for forming the positive electrode active material layer on a separate support, and then laminating a film obtained by peeling the composition from the support onto a positive electrode current collector.

### Lithium Secondary Battery

Still another embodiment provides a lithium secondary battery including the positive electrode.

Specifically, the lithium secondary battery may include a positive electrode, a negative electrode disposed to face the positive electrode, a separator interposed between the positive electrode and the negative electrode, and an electrolyte, and the positive electrode is the same as described above. In addition, the lithium secondary battery may optionally further include a battery case accommodating an electrode assembly including the positive electrode, the negative electrode, and the separator, and a sealing member sealing the battery case.

In the lithium secondary battery, the negative electrode may include a negative electrode current collector and a negative electrode active material layer positioned on the negative electrode current collector.

The negative electrode current collector is not particularly limited as long as it has high conductivity without causing a chemical change in the battery, and examples thereof may include copper, stainless steel, aluminum, nickel, titanium, calcined carbon, copper or stainless steel surface-treated with carbon, nickel, titanium, silver, or the like, an aluminum-cadmium alloy, and the like. In addition, the negative electrode current collector may generally have a thickness of 3 to 500 µm, and like the positive electrode current collector, fine irregularities may be formed on a surface of the current collector to enhance bonding force of the negative electrode active material. For example, the negative electrode current collector may be used in various forms such as a film, a sheet, a foil, a net, a porous body, a foam, and a nonwoven fabric.

The negative electrode active material layer may optionally include a binder and a conductive material together with a negative electrode active material. As an example, the negative electrode active material layer may be manufactured by applying and drying, on a negative electrode current collector, a composition for forming a negative electrode active material layer including the negative electrode active material and optionally including the binder and the conductive material, or may be manufactured by casting the composition for forming the negative electrode on a separate support and then laminating a film obtained by peeling the composition from the support onto the negative electrode current collector.

As the negative electrode active material, a compound capable of reversible intercalation and deintercalation of lithium may be used. Specific examples thereof may include carbonaceous materials such as artificial graphite, natural graphite, graphitized carbon fibers, and amorphous carbon; metallic compounds capable of alloying with lithium, such as Si, Al, Sn, Pb, Zn, Bi, In, Mg, Ga, Cd, a Si alloy, a Sn alloy, or an Al alloy; metal oxides capable of doping and dedoping lithium, such as SiOβ (0<β<2), SnO₂, vanadium oxide, and lithium vanadium oxide; or composites including the metallic compound and a carbonaceous material, such as a Si-C composite or a Sn-C composite, and one thereof or a mixture of two or more thereof may be used. In addition, a metal lithium thin film may be used as the negative electrode active material. Further, as the carbon material, both low-crystalline carbon and high-crystalline carbon may be used. Representative examples of the low-crystalline carbon include soft carbon and hard carbon, and representative examples of the high-crystalline carbon include amorphous, plate-like, flake-like, spherical, or fibrous natural graphite or artificial graphite, Kish graphite, pyrolytic carbon, mesophase pitch-based carbon fibers, meso-carbon microbeads, mesophase pitches, and high-temperature calcined carbon such as petroleum or coal tar pitch-derived cokes.

The binder and the conductive material may be the same as those described above for the positive electrode.

Next, depending on the type of lithium secondary battery, a separator may be present between the positive electrode and the negative electrode. As such a separator, polyethylene, polypropylene, polyvinylidene fluoride, or a multilayer film of two or more layers thereof may be used, and a mixed multilayer film such as a polyethylene/polypropylene two-layer separator, a polyethylene/polypropylene/polyethylene three-layer separator, a polypropylene/polyethylene/polypropylene three-layer separator, or the like may also be used.

In addition, in the lithium secondary battery, the electrolyte may include an organic liquid electrolyte, an inorganic liquid electrolyte, a solid polymer electrolyte, a gel-type polymer electrolyte, a solid inorganic electrolyte, a molten inorganic electrolyte, and the like, which can be used when manufacturing a lithium secondary battery, but the electrolyte is not limited thereto.

Specifically, the organic liquid electrolyte may include an organic solvent and a lithium salt.

As the organic solvent, any solvent may be used without particular limitation as long as it can serve as a medium through which ions involved in an electrochemical reaction of the battery can move. Specifically, examples of the organic solvent may include ester-based solvents such as methyl acetate, ethyl acetate, γ-butyrolactone, and ε-caprolactone; ether-based solvents such as dibutyl ether and tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol-based solvents such as ethyl alcohol and isopropyl alcohol; nitriles represented by R-CN, wherein R is a C2 to C20 linear, branched, or cyclic hydrocarbon group and may include a double-bond aromatic ring or an ether bond; amides such as dimethylformamide; dioxolanes such as 1,3-dioxolane; or sulfolanes. Among these, carbonate-based solvents are preferable, and a mixture of a cyclic carbonate having high ionic conductivity and high dielectric constant, which can improve charge/discharge performance of a battery, such as ethylene carbonate or propylene carbonate, and a low-viscosity linear carbonate-based compound, such as ethyl methyl carbonate, dimethyl carbonate, or diethyl carbonate, is more preferable. In this case, when the cyclic carbonate and the chain carbonate are mixed and used at a volume ratio of about 1:1 to about 1:9, excellent electrolyte solution performance may be exhibited.

The lithium salt may be used without particular limitation as long as it is a compound capable of providing lithium ions used in a lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used. The concentration of the lithium salt is preferably used within a range of 0.1 to 2.0 M. When the concentration of the lithium salt is within the above range, the electrolyte has appropriate conductivity and viscosity, and thus excellent electrolyte performance can be exhibited and lithium ions can effectively move.

As described above, since the lithium secondary battery including the positive electrode active material according to the present invention stably exhibits excellent discharge capacity, output characteristics, and capacity retention rate, the lithium secondary battery is useful for portable devices such as mobile phones, notebook computers, and digital cameras, and in the field of electric vehicles such as hybrid electric vehicles (HEVs).

### [MODE FOR CARRYING OUT THE INVENTION]

Hereinafter, embodiments of the present invention will be described in detail. However, these are provided as examples, and the present invention is not limited thereto, and the present invention is only defined by the scope of the claims to be described below.

### Example 1

(Mixing) A precursor having a composition of Ni_{0.70}Mn_{0.30}(OH)₂ was prepared through a general coprecipitation process. Next, the precursor and LiOH·H₂O were introduced into a mixer such that a molar ratio (Li/Me) of lithium to all metals in the precursor became 1.07, and then mechanically mixed to prepare a mixture.

(Calcination) Thereafter, the mixture was heated at 5°C/min under an oxygen (O₂) atmosphere, calcined at a temperature of 850°C for 6 hours, and then naturally cooled to room temperature. The composition of the obtained lithium metal oxide was Li_{1.07}Ni_{0.70}Mn_{0.30}O₂.

(Coating) Co(OH)₂ was dry-mixed as a coating raw material with the obtained lithium metal oxide. At this time, mixing was performed such that the content of Co was 0.01 mol based on 100 mol of the entire final positive electrode active material. Thereafter, heat treatment was performed at 680°C under an O₂ atmosphere to manufacture a positive electrode active material on which a coating layer was formed. Specifically, the heat treatment was performed by raising the temperature for 3 hours and maintaining the temperature for 6 hours.

### Example 2

A positive electrode active material was manufactured in the same manner as in Example 1, except that, in the coating process, the coating raw material was introduced such that the content of Co was 0.005 mol based on 100 mol of the entire final positive electrode active material.

### Example 3

A positive electrode active material was manufactured in the same manner as in Example 1, except that, in the coating process, the coating raw material was introduced such that the content of Co was 0.001 mol based on 100 mol of the entire final positive electrode active material.

### Comparative Example 1

A positive electrode active material was manufactured in the same manner as in Example 1, except that the coating process was not performed.

### Comparative Example 2

In the coating process, Co(OH)₂ and NH₄VO₃ were dry-mixed as coating raw materials with the obtained lithium metal oxide. At this time, a positive electrode active material was manufactured in the same manner as in Example 1, except that mixing was performed such that the content of Co was 500 ppm and the content of V was 0.1 mol based on 100 mol of the entire final positive electrode active material.

### Comparative Example 3

A positive electrode active material was manufactured in the same manner as in Example 1, except that, in the coating process, after a first heat treatment was performed at 680°C, a second heat treatment was performed under the same conditions for 3 hours.

### Comparative Example 4

A positive electrode active material was manufactured in the same manner as in Example 1, except that, in the mixing process, a precursor having a composition of Ni_{0.69}Co_{0.02}Mn_{0.29}(OH)₂ was used.

Accordingly, the composition of the lithium metal oxide obtained in the calcination process was Li_{1.07}Ni_{0.69}Co_{0.02}Mn_{0.29}O₂.

### Comparative Example 5

A positive electrode active material was manufactured in the same manner as in Example 1, except that, in the coating process, the coating raw material was introduced such that the content of Co was 0.05 mol based on 100 mol of the entire final positive electrode active material.

### Comparative Example 6

A positive electrode active material was manufactured in the same manner as in Example 1, except that, in the mixing process, a precursor having a composition of Ni_{0.80}Mn_{0.20}(OH)₂ was used.

Accordingly, the composition of the lithium metal oxide obtained in the calcination process was Li_{1.07}Ni_{0.80}Mn_{0.20}O₂.

### Comparative Example 7

A positive electrode active material was manufactured in the same manner as in Comparative Example 4, except that, in the coating process, the coating raw material was introduced such that the content of Co was 0.005 mol based on 100 mol of the entire final positive electrode active material.

Accordingly, the composition of the lithium metal oxide obtained in the calcination process was Li_{1.07}Ni_{0.69}Co_{0.02}Mn_{0.29}O₂.

### Experimental Example 1: Coin Cell Manufacture and Evaluation of Electrochemical Characteristics

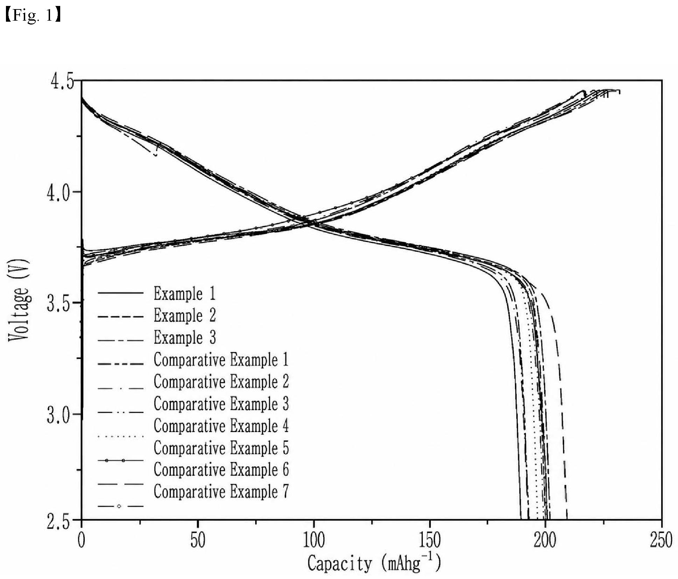

CR2032 coin cells were manufactured by the following method using the positive electrode active materials manufactured in the Examples and Comparative Examples, and then electrochemical characteristics were evaluated and are shown in Table 1 below and FIGS. 1 to 3.

### (1) Coin Cell Manufacture

A slurry for manufacturing an electrode plate was prepared by mixing the manufactured positive electrode active material, a conductive material (carbon black, Denka black), and a binder (PVDF, KF1100) at 96.5:1.5:2 wt%, and adding NMP (N-methyl-2-pyrrolidone) to adjust viscosity such that a solid content was about 30%. The manufactured slurry was coated on a 20 µm-thick Al foil using a doctor blade, and then dried and rolled. The electrode loading amount was 15.4 mg/cm², and the rolling density (25°C, 20 kN) was 3.6 g/cm³.

A 2032 coin-type half cell was manufactured by a conventional method using the positive electrode, a lithium metal negative electrode (thickness 200 µm, Honzo metal), an electrolyte solution, and a polypropylene polyethylene separator. The electrolyte solution was used by preparing a mixed solution by dissolving 1 M LiPF₆ in a mixed solvent of ethylene carbonate, dimethyl carbonate, and diethyl carbonate (mixing ratio EC:DMC:DEC=1:2:1 vol%), and then adding 3 wt% of vinylene carbonate (VC) thereto.

### (2) Evaluation of Initial Capacity and Initial Efficiency

After the coin cell manufactured in (1) was aged at 25°C for 12 hours, a charge/discharge test was performed at 25°C. For initial capacity evaluation, 200 mAh/g was used as a reference capacity, and charging was performed to 4.45 V at a constant current of 0.1 C, followed by switching to constant voltage, and charging was continued until the end current reached 0.05 C. After charging, a rest time of 10 minutes was provided, and discharge was performed to 2.5 V at a constant current of 0.1 C based on a reference capacity of 200 mAh/g.

### (3) Evaluation of Output Characteristics

A total of four cycles were performed at 25°C, and measurement was performed while changing the C-rate during constant-current discharge within a voltage range of 2.5 to 4.45 V based on a reference capacity of 200 mAh/g.

Output characteristics were evaluated by comparing an initial discharge capacity during 0.5C charge/0.1C discharge in the first cycle and an initial discharge capacity during 0.5C charge/2C discharge in the fourth cycle.

### (4) Evaluation of Resistance Characteristics

After a coin cell was manufactured, at 25°C, charging was performed to 4.45 V at a constant current of 0.5 C, followed by switching to constant voltage, and charging was continued until the end current reached 0.05 C. After charging, a rest time of 1 minute was provided, and discharge was performed to 2.5 V at a constant current of 1.0 C. At this time, impedance was measured to evaluate resistance characteristics.

### (5) Evaluation of High-Temperature Lifespan Characteristics

After a coin cell was manufactured, at 45°C, charging was performed to 4.45 V at a constant current of 0.5 C, followed by switching to constant voltage, and charging was continued until the end current reached 0.05 C. After charging, a rest time of 10 minutes was provided, and discharge was performed to 2.5 V at a constant current of 1.0 C. Charging and discharging were performed 30 times under such charge/discharge cycle conditions, and a capacity retention rate of the 30th cycle relative to the first cycle was calculated.

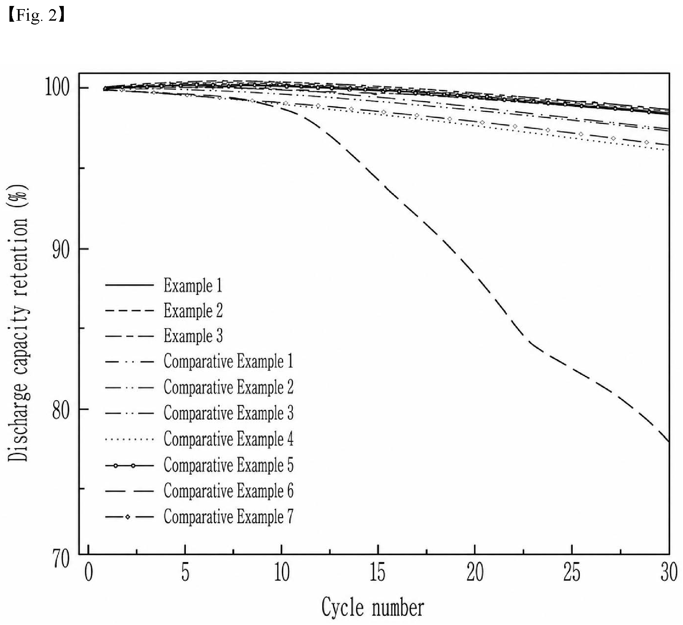

Meanwhile, FIG. 1 shows results of measuring initial capacities of positive electrode active materials manufactured according to Examples 1 to 3 and Comparative Examples 1 to 7, and FIG. 2 shows results of measuring high-temperature lifespan characteristics of positive electrode active materials manufactured according to Examples 1 to 3 and Comparative Examples 1 to 2.

**[Table 1]**

| Classification | | Compa rative Example 1 | Example 3 | Example 2 | Example 1 | Compa rative Example 2 | Compa rative Example 3 | Compa rative Example 4 | Compa rative Example 5 | Compa rative Example 6 | Compa rative Example 7 |
|---|---|---|---|---|---|---|---|---|---|---|---|
| Capa city | Initial Charge Capacity (mAh/g) | 217.1 | 225.3 | 225.1 | 226.7 | 216.7 | 221.6 | 220.0 | 221.0 | 229.8 | 231.7 |
| | Initial Discharge Capacity (mAh/g) | 192.7 | 199.5 | 200.3 | 202 | 192.7 | 199.1 | 197.6 | 196.6 | 209.2 | 200.9 |
| | Initial Efficiency (%) | 88.8 | 88.6 | 89 | 89.2 | 88.9 | 89.9 | 89.8 | 88.8 | 91.0 | 86.7 |
| Output Char acteri stics | 0.1C Discharge Capacity (mAh/g) | 193.3 | 201.5 | 201.9 | 203.8 | 189.3 | 199.4 | 198.7 | 192.7 | 210.1 | 201.2 |
| | 2C Discharge Capacity (mAh/g) | 162.7 | 169 | 169.3 | 171.3 | 161 | 167.3 | 166.5 | 168.4 | 178.2 | 167.8 |
| | Rate Characteristics (2C/0.1C, %) | 84.2 | 83.9 | 83.8 | 84.1 | 82.6 | 83.9 | 83.8 | 87.4 | 84.8 | 83.4 |
| Initial Resistance (0.2C, 1 min, Ω) | | 41.2 | 38.7 | 35.7 | 34.9 | 32.5 | 32.2 | 32.1 | 37.0 | 32.1 | 30.1 |
| Capacity Retention Rate, 30 cycles | | 96.2 | 98.6 | 98.8 | 98.8 | 97. | 97.7 | 94.6 | 97.4 | 77.9 | 96.5 |

Referring to Table 1 and FIGS. 1 and 2, it can be seen that the positive electrode active materials of Examples 1 to 3, in which the nickel content and the value of Equation 1 satisfy the ranges of the present embodiment, have excellent initial charge/discharge capacity and initial efficiency, and thus energy density and efficiency are improved. In addition, the positive electrode active materials have excellent output characteristics, and thus performance is maintained even under high-output conditions, enabling rapid charging/discharging, and have advantageous effects in that resistance loss can be minimized because they have low initial resistance values. Furthermore, it can be seen that the capacity retention rate is excellent, and thus lifespan characteristics are also improved. That is, it was confirmed that, in the positive electrode active materials of Examples 1 to 3, capacity, rate characteristics, resistance characteristics, and lifespan characteristics are comprehensively very excellently implemented.

In contrast, it can be seen that, in the positive electrode active material of Comparative Example 1 in which no coating layer was formed, both capacity and output characteristics are deteriorated, and initial resistance is also high. It can be seen that, in the positive electrode active materials of Comparative Example 2, in which the cobalt content is outside the range of the Examples, and Comparative Example 3, in which heat treatment was performed twice, capacity and output characteristics are deteriorated.

In addition, in the case of Comparative Example 4 in which the metal oxide includes cobalt, it can be confirmed that initial resistance is favorable because the base material includes cobalt, but lifespan characteristics are significantly deteriorated.

Furthermore, it can be seen that lifespan characteristics are also significantly deteriorated in the positive electrode active materials manufactured according to Comparative Example 5, in which the cobalt content is outside the range of the present embodiment, Comparative Example 6, in which the nickel content is outside the range of the present embodiment, and Comparative Example 7, in which a coating layer is formed on a composition including cobalt.

### Experimental Example 2: XRD Measurement Results

X-ray diffraction measurements were performed on the positive electrode active materials manufactured according to Examples 1 to 3 and Comparative Examples 1 to 7 using CuKα rays.

Specifically, using XRD equipment (X'pert3 powder diffraction manufactured by Panalytical), intensities (peak areas) of the (003) plane and the (104) plane and intensity of the (108) plane were measured at a scan speed (°/s) of 0.328. From these results, I(003)/I(104) was obtained.

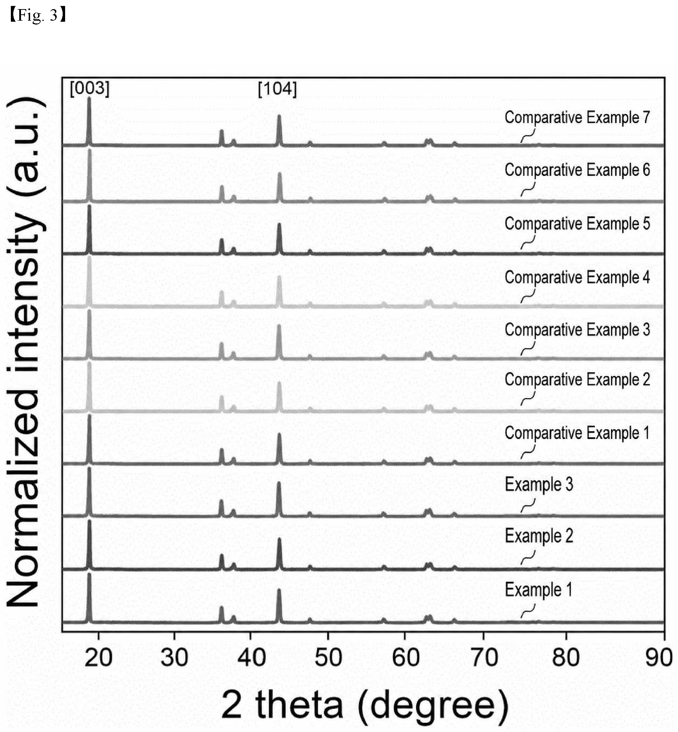

In addition, using this, lattice constants and crystal sizes of respective materials were measured through XRD Rietveld analysis. The results are shown in Table 2 below and FIG. 3.

**[Table 2]**

| | a (Å) | c (Å) | Peak intensity (I_{[003]}/I_{[104]}) | Crystallite Size (nm) (C) | Equation 1 (A*C)/B |
|---|---|---|---|---|---|
| | (A) | (B) | | | |
| Example 1 | 2.884 | 14.271 | 1.1836 | 127.3 | 25.7 |
| Example 2 | 2.882 | 14.270 | 1.1364 | 120.5 | 24.3 |
| Example 3 | 2.884 | 14.275 | 1.1036 | 118.1 | 23.9 |
| Comparative Example 1 | 2.878 | 14.269 | 1.0886 | 92.1 | 18.6 |
| Comparative Example 2 | 2.871 | 14.286 | 1.0983 | 100.2 | 20.1 |
| Comparative Example 3 | 2.874 | 14.261 | 1.1015 | 93.4 | 18.8 |
| Comparative Example 4 | 2.866 | 14.292 | 1.1153 | 104.8 | 21.0 |
| Comparative Example 5 | 2.888 | 14.282 | 1.2647 | 131.7 | 26.6 |
| Comparative Example 6 | 2.982 | 14.875 | 1.1922 | 152.1 | 30.5 |
| Comparative Example 7 | 2.875 | 14.287 | 1.0365 | 106.8 | 21.5 |

Referring to FIG. 3, patterns in which a (003) peak, which is a typical layered structure, shows a higher intensity than a (104) peak were confirmed in all of the positive electrode active materials of Examples 1 to 3 and Comparative Examples 1 to 7.

In addition, the XRD patterns of Examples 1 to 3 showed relatively higher intensities, and through this, it can be confirmed that the positive electrode active materials of the Examples have excellent crystallinity and well-formed structures.

In contrast, in the case of Comparative Example 6, it can be seen that the peak of the (003) plane became relatively broad, which indicates that part of the layered structure collapsed.

Meanwhile, referring to Table 2, it can be seen that, in Examples 1 to 3, the value of Equation 1 satisfies the range of the present embodiment. In addition, considering the I[003]/I[104] peak intensity ratio, it can be seen that the layered structure is well formed.

In contrast, in Comparative Examples 1 to 7, all values of Equation 1 are outside the range of the present embodiment. In addition, in the case of Comparative Examples 3 and 4, the I[003]/I[104] peak intensity ratio tends to be somewhat low, and through this, it can be seen that the layered structure is incomplete or some of transition metals are mixed into the lithium layer, thereby causing structural defects.

In addition, although Examples 1 to 3 have crystallite sizes satisfying the range of the present embodiment, it can be confirmed that Comparative Examples 1 to 7 have crystallite sizes lower than the range of the present embodiment. Therefore, in the case of the Comparative Examples, it is predicted that interfacial resistance between particles increases and thus lifespan or resistance characteristics deteriorate.

In the case of the Examples, because the coating layer is included, it is presumed that the coating raw material entered not only the surface of the lithium metal oxide but also the structure, thereby affecting crystal size.

Although preferred embodiments of the present invention have been described above, the present invention is not limited thereto, and various modifications may be made and practiced within the scope of the claims, the detailed description of the invention, and the accompanying drawings, and such modifications also naturally fall within the scope of the present invention.

Accordingly, the substantial scope of rights of the present invention should be defined by the appended claims and equivalents thereof.

## Claims

1. A positive electrode active material for a lithium secondary battery, comprising:
a metal oxide including nickel and manganese; and
a coating layer positioned on a surface of the metal oxide and containing cobalt,
wherein a content of nickel in the metal oxide is 0.75 mol or less based on 1 mol of all metals excluding lithium, and
wherein the positive electrode active material satisfies the following Equation 1: [Equation 1] $22.0 \leq \left(A*C\right) / B \leq 26.5$
wherein, in Equation 1,
A and B are an a-axis constant and a c-axis constant, respectively, measured by XRD analysis of the positive electrode active material, and
C means a crystallite size measured by XRD analysis of the positive electrode active material.

2. The positive electrode active material for a lithium secondary battery of claim 1,
wherein the a-axis constant measured by XRD analysis of the positive electrode active material is in a range of 2.880 Å to 2.890 Å.

3. The positive electrode active material for a lithium secondary battery of claim 1,
wherein the c-axis constant measured by XRD analysis of the positive electrode active material is in a range of 14.262 Å to 14.281 Å.

4. The positive electrode active material for a lithium secondary battery of claim 1,
wherein the crystallite size of the positive electrode active material is in a range of 94.0 nm to 131.0 nm.

5. The positive electrode active material for a lithium secondary battery of claim 1,
wherein the positive electrode active material has an I003/I104 ratio, which is a ratio of a peak value I003 corresponding to a (003) plane and a peak value I104 corresponding to a (104) plane, measured by XRD analysis, in a range of 1.1020 to 1.2640.

6. The positive electrode active material for a lithium secondary battery of claim 1,
wherein a content of cobalt based on an entire metal oxide on which the coating layer is formed is 0.012 mol or less.

7. The positive electrode active material for a lithium secondary battery of claim 1,
wherein a content of cobalt based on an entire metal oxide on which the coating layer is formed is in a range of 0.001 mol to 0.012 mol.

8. The positive electrode active material for a lithium secondary battery of claim 1,
wherein the metal oxide does not include cobalt.

9. The positive electrode active material for a lithium secondary battery of claim 1,
wherein the content of nickel in the metal oxide is in a range of 0.65 to 0.75 based on 1 mol of all metals excluding lithium.

10. The positive electrode active material for a lithium secondary battery of claim 1,
wherein a content of manganese in the metal oxide is in a range of 0.25 to 0.35 based on 1 mol of all metals excluding lithium.

11. The positive electrode active material for a lithium secondary battery of claim 1,
wherein the metal oxide is represented by the following Chemical Formula 1:
[Chemical Formula 1] Liₐ[NiₓMn_{y}M_{z}]O₂
wherein, in Chemical Formula 1, 0.8≤a≤1.2, 0.67≤x≤0.73, 0.25≤y≤0.38, 0≤z≤0.2, x+y+z=1, and M is Zr, Al, B, Y, Mg, Ti, Nb, W, Sc, Si, V, Fe, Mo, Ce, Hf, Ta, La, Sr, Sn, Sb, Zn, Cu, Ge, Mo, Ru, Ir, Na, or a combination thereof.

12. The positive electrode active material for a lithium secondary battery of claim 1,
wherein an average particle diameter (D50) of the positive electrode active material is in a range of 10 µm to 15 µm.

13. A method for manufacturing a positive electrode active material for a lithium secondary battery, comprising:
preparing a metal hydroxide including nickel and manganese;
preparing a mixture by mixing the metal hydroxide and a lithium raw material;
obtaining a calcined product by calcining the mixture; and
obtaining a metal oxide on which a coating layer is formed by mixing the calcined product and a coating raw material including cobalt and then heat-treating the same,
wherein the metal oxide on which the coating layer is formed satisfies the following Equation 1: [Equation 1] $22.0 \leq \left(A*C\right) / B \leq 26.5$
wherein, in Equation 1,
A and B are an a-axis constant and a c-axis constant, respectively, measured by XRD analysis of the positive electrode active material, and
C means a crystallite size measured by XRD analysis of the positive electrode active material.

14. The method for manufacturing a positive electrode active material for a lithium secondary battery of claim 13,
wherein the coating raw material including cobalt is introduced such that a content of cobalt is 0.012 mol or less based on an entire metal oxide on which the coating layer is formed.

15. The method for manufacturing a positive electrode active material for a lithium secondary battery of claim 13,
wherein the coating raw material including cobalt includes at least one of Co(OH)₂, CoCl₂, CoO, CoF₃, CoSO₄·xH₂O, CoSO₄·7H₂O, (CH₃COO)₂Co·4H₂O, Co(NO₃)₂·6H₂O, (CH₃CO₂)₂Co, CoCO₃·xH₂O, Co₃(PO₄)₂, and a combination thereof.

16. The method for manufacturing a positive electrode active material for a lithium secondary battery of claim 13,
wherein an average particle diameter (D50) of the coating raw material including cobalt is in a range of 10 µm to 12 µm.

17. The method for manufacturing a positive electrode active material for a lithium secondary battery of claim 13,
wherein the heat treatment process is performed only once.

18. A positive electrode for a lithium secondary battery, comprising the positive electrode active material of claim 1.

19. A lithium secondary battery comprising the positive electrode for a lithium secondary battery of claim 18.
